# EUROPEAN PATENT SPECIFICATION

(11) **EP 2 473 361 B1**
(45) Date of publication and mention of the grant of the patent: **28.06.2017**
(21) Application number: 09848814.1
(22) Date of filing: 31.08.2009
(51) Int. Cl.: B60G 17/019, B60G 3/20

(54) **WHEEL SUSPENSION ARRANGEMENT AND VEHICLE COMPRISING A WHEEL SUSPENSION ARRANGEMENT**
RADAUFHÄNGUNGSANORDNUNG UND FAHRZEUG MIT EINER RADAUFHÄNGUNGSANORDNUNG
AGENCEMENT DE SUSPENSION DE ROUE ET VÉHICULE COMPRENANT UN AGENCEMENT DE SUSPENSION DE ROUE

(43) Date of publication of application: 11.07.2012
(73) Proprietor: Volvo Lastvagnar AB, 405 08 Göteborg (SE)
(72) Inventor: NILSSON, Rickard, SE-446 33 Älvängen (SE); CARLSSON, Anders, SE-423 41 Torslanda (SE)
(74) Representative: Volvo Technology Corporation
(86) International application number: PCT/SE2009/000396
(87) International publication number: WO 2011/025417

(56) References cited:
- EP-A1- 1 707 840
- EP-A2- 1 375 205
- WO-A1-02/18869
- WO-A2-2005/030563
- JP-A- 2005 292 070
- US-A- 5 265 484
- US-A1- 2005 280 219
- US-A1- 2007 040 355
- US-A1- 2008 174 083
- US-A1- 2008 174 083

## Description

### TECHNICAL FIELD

The invention relates to a wheel suspension arrangement comprising a frame, a wheel hub, at least one sensor for determining a vertical distance between the frame and the wheel hub and at least two link arms which are pivotably connected between the frame and the wheel hub at different heights. The invention also relates to a vehicle comprising a wheel suspension arrangement.

### BACKGROUND OF THE INVENTION

It is known in the art that it is desirable to provide information about the actual vertical distance between the frame and the wheel hub, especially for a truck. In trucks provided with leaf springs, it is possible to determine a load on the axle resulting from the weight of the payload on the basis of said determined vertical distance and the spring constant of the leaf spring etc. Further, for trucks provided with means for adjusting the vertical distance between the frame and the wheel hub, it is possible to adjust said vertical distance on the basis of a desired ground clearance or for adjusting the frame height in relation to some other object. Particularly for trucks the height can be changed during operation. This is often done when the vehicle is at standstill, for instance when coupling or decoupling a trailer to or from a tractor, or for loading and unloading a swap body, or for loading and unloading cargo at a loading bridge and the like. By way of example, the height can be changed by deflating or inflating the air suspension in an air suspended vehicle.

According to prior art, it is known to determine the vertical distance between the frame and the wheel hub by means of a link arm system extending between the frame and the wheel axle. An angle sensor is provided at a pivot joint between an upper link arm in the link arm system and the frame. Such a link arm system requires mounting at a late step during assembly of the truck, wherein the mounting is often problematic due to lack of space. Further, a calibration of the sensor has to be performed after said mounting, which delays a finish of the production.

US 2008/0174083 A1 discloses a wheel suspension where angle sensors are arranged in pivot joints in the wheel suspension which allows for determining the king pin angle, the track angle and the wheel load acting on the wheel from measured values that are recorded in the wheel suspension itself. The values are derived by two angle measurements at different locations of the wheel suspension. The wheel force includes a time varying whell deflection value determined by one of the angle sensors.

### SUMMARY OF THE INVENTION

It is an object of the invention to provide a wheel suspension arrangement which provides an accurate determination of the vertical distance between the frame and the wheel hub and which creates conditions for a facilitated and/or time efficient mounting.

Another object is to provide a vehicle comprising such a wheel suspension arrangement.

The objects are achieved by the features of the independent claims. The other claims, the drawings and the description disclose advantageous embodiments of the invention.

According to a first aspect of the invention, a wheel suspension arrangement comprising a frame, a wheel hub, at least one sensor for determining a vertical distance between the frame and the wheel hub and at least two link arms which are pivotably connected between the frame and the wheel hub at different heights.

Said sensor is arranged in a pivot joint of at least one of the link arms.

Favourably, the sensor in the pivot joint can be calibrated before the assembly of the truck, thus reducing production costs. Favourably, all the involved components can be preassembled in a pre work station. Parameters such as the driving height for the truck or the vertical distance between frame and wheel hub can be set according to a value for a "free hanging" axle. This value can be calculated according to the specified driving height value for fully loaded truck.

As a result, time consuming calibration process during assembly can be avoided. Preferably, the sensor can be an angle sensor which measures an angle change proportional to a change of height of the vehicle. Further, due to the fact that the sensor is arranged in a pivot joint of one of the link arms, no additional link arm system is necessary for the distance determination. Thus, the number of components can be reduced. Further, the prior art link arm system is arranged between the axle and the frame and thereby exposed to external conditions, wherein it is subjected to wear. A further advantage in relation to the prior art link arm system is therefore that the inventive solution is protected from external conditions due to its location.

The sensor is an angle sensor. The angle sensor can be embodied as a compact component which can easily be integrated in pivot joints. The at least one sensor is a magnetic sensor. A magnetic sensor can be encapsulated in an easy way and protected from harmful environmental influences. Further, the at least one sensor is arranged in a cover of the pivot joint. Favourably, a compact arrangement is possible.

Furthermore, the arrangement comprises means for controlling or an actuator for adjusting the vertical distance between the frame and the wheel hub. Said distance control means is preferably configured to provide a means for a manual (or automatic) control of said vertical distance in order to achieve a desired vertical distance between the frame and the wheel hub based on the sensed angle. Said distance control means is preferably formed by an air spring system.

Each of the at least two link arms is connected to the frame via a pivot axis which is oriented parallel to a longitudinal extension of the frame. The wheel can be tilted when the height of the vehicle is changed virtually without changing the ground contact point thus protecting tyres and ground.

Alternatively, each of the link arms is connected to the frame via a pivot axis which is oriented crosswise, particularly perpendicular, to a longitudinal extension of the frame. When changing the height of the vehicle, damage to the tyre can be avoided as the wheel can follow the height change by rotation of the wheel.

According to a favourable embodiment of the invention, the at least two link arms can be arranged in a way that a ground contact point of a wheel associated to the wheel hub is predominantly stationary with respect to a movement sideways in case the vertical distance between the frame and the wheel hub is changed. Advantageously, a height change during standstill of the vehicle allows tilting of the wheel without changing the ground contact point as the ground contact point constitutes the tilt centre. In contrast to this, a Mc-Pherson type suspension which has only one link arm unavoidably must deform the tyre of the wheel at the ground contact point as the tilt centre is at the contact point of the link arm on the wheel. The tyre or even the surface under the ground contact point may be damaged.

According to a favourable embodiment of the invention, the pivot joint can be configured to carry substantial load from the frame to at least one wheel associated to the wheel hub. Favourably, every pivot joint of the suspension with a pivot axis parallel to the ground can be used for height measurement.

According to a favourable embodiment of the invention, the pivot joint can be configured to carry side load forces introduced by at least one wheel associated to the wheel hub. Advantageously, even pivot joints with a pivot axis oriented crosswise to the frame rails can be equipped with the sensor for measuring the height of the vehicle.

According to a favourable embodiment of the invention, -the vertical distance between the frame and the wheel hub is derivable from the angle measured by the sensor. The measurement is
accurate.

According to a favourable embodiment of the invention, the at least one sensor can be configured to provide a digital sensor signal, particularly to a vehicular data bus, preferably a CAN bus. The sensor data can be processed fast and accurate. Complex wiring can be avoided.

According to a favourable embodiment of the invention, the arrangement can comprise suspension means provided between the wheel hub and the frame.

According to a further development of the last-mentioned embodiment of the invention, the wheel hub can be suspended to the frame by means of an air spring system. Favourably, the actual height of the air spring can be monitored with the at least one sensor in the pivot joint so that the actual position of the vehicle is known and the air spring system can be adjusted correctly.

According to an alternative to the last-mentioned embodiment of the invention, the wheel hub can be suspended to the frame by means of a leaf spring system. Even with a leaf spring system an accurate height measurement is possible.

According to a favourable embodiment of the invention, the arrangement can comprise a front axle comprising said wheel hub, and the wheel hub can be configured for an individual wheel suspension. A height adjustment is possible for each wheel independently.

According to a favourable embodiment of the invention, the arrangement can comprise a rear axle comprising said wheel hub and the wheel hub can be configured for an individual wheel suspension. A height adjustment is possible for each wheel independently.

According to a favourable embodiment of the invention, each of two or more pivot joints can be equipped with said sensor. This configuration allows for a redundant height measurement.

According to a favourable embodiment of the invention, the at least two link arms form a double wishbone suspension. A double wishbone suspension is a favourable suspension for an individual wheel suspension.

According to a favourable embodiment of the invention, the arrangement can be adapted to allow an adjustment of the vertical distance between the frame and the wheel hub during standstill of the vehicle. This is particularly expedient for trucks which must perform height adjustments during standstill.

According to another aspect of the invention, a vehicle is proposed, particularly a truck, comprising a wheel suspension arrangement according to any feature described above. Favourably, the production costs can be reduced as calibration of the sensor can be done before or after assembly. A sensor can be integrated in every pivot joint which has a pivot axis parallel to the ground. As a result, the sensor can be mounted in a flexible way and an adaptation to the actual space requirements and the like is possible.

### BRIEF DESCRIPTION OF THE DRAWINGS

The present invention together with the above-mentioned and other objects and advantages may best be understood from the following detailed description of the embodiment(s), but not restricted to the embodiments, wherein is shown schematically:
- Fig. 1a, 1b: in a perspective view a truck frame comprising an example embodiment of a wheel suspension arrangement with two double-wishbone link arms from the rear (Fig. 1 a), and an enlarged view of a wheel hub at the right hand side of the frame (Fig. 1 b);
- Fig. 2: a sketch illustrating the influence of a height change on a wheel suspended by the suspension depicted in Figs. 1a, 1b;
- Fig. 3: in a perspective view a truck frame comprising another example embodiment of a wheel suspension arrangement with two link arms parallel to a frame rail;
- Fig. 4: a sketch illustrating the influence of a height change on a wheel suspended by the suspension depicted in Fig. 3;
- Fig. 5a, 5b: an example embodiment of a angle sensor; and
- Fig. 6: an example embodiment of a vehicle employing a wheel suspension arrangement according to the invention.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

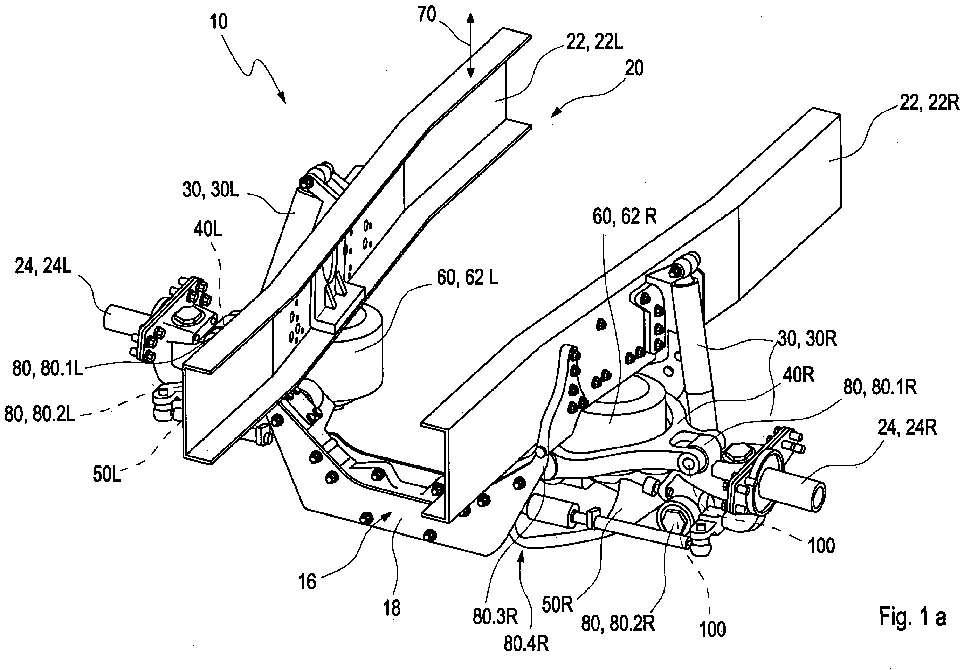

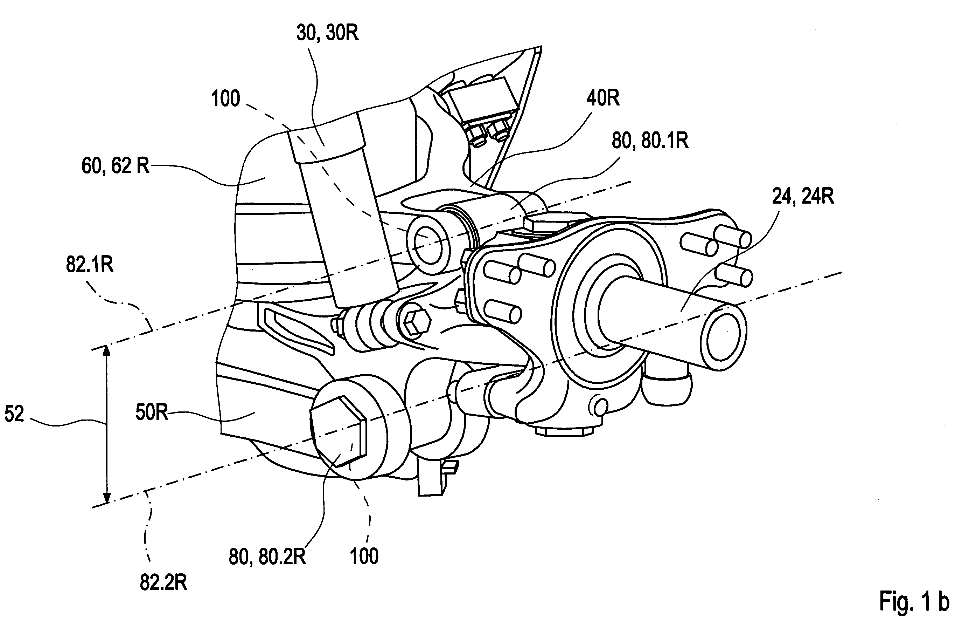

Fig. 1 a depicts schematically in a perspective view from the rear an embodiment of a wheel suspension arrangement 10. The wheel suspension arrangement 10 comprises a frame 20, a wheel hub 24, at least one sensor 100 for determining a height of the frame 20 relative to the wheel hub 24 and at least two link arms 40, 50 which are pivotably connected between the frame 20 and the wheel hub 24 at different heights with a vertical distance. Fig. 1b depicts an enlarged view of the wheel hub 24 at the right hand side of the frame.

The link arms 40, 50 are spaced at a vertical distance 52. The link arms 40, 50 are attached to the frame 20 by means of a holder 18. The two link arms 40, 50 are embodied by way of example as wishbones forming a double wishbone suspension. The frame 20 has a right frame rail 22R and a left frame rail 22L. In this double wishbone suspension an extension direction of the link arms 40, 50 is substantially perpendicular to an extension direction of the frame rails 22.

As known in the art, many suspension components are arranged symmetrically on both frame rails 22R, 22L of such a frame 20. The reference numerals of like components, when referring to the left frame rail 22L, have an "L" after the reference numeral. The reference numerals of like components, when referring to the right frame rail 22R, have an "R" after the reference numeral. A like component

As known in the art, dampers 30R, 30L of a damper system 30 are arranged between each of the frame rails 22R, 22L and the respective wheel hub 24R, 24L, as well as air bellows 62R, 62L of an air suspension system 60 which are arranged between each of the frame rails 22R, 22L and the respective wheel hub 24R, 24L. The air spring system 60 suspends the wheel hub 24 to the frame 20. Of course, the wheel hub 24R, 24L may alternatively be suspended by a leaf spring system (not shown).

By way of example, a front axle 16 comprises said wheel hub 24 which is configured for an individual wheel suspension. Of course, a rear axle (not shown) may additionally or alternatively comprise said wheel hub 24. The wheel hub 24 is provided for attachment of a wheel (not shown).

The upper link arm 40 has a pivot joint 80.1 R next to the wheel hub 24 and a pivot joint 80.3R at the holder 18. The lower link arm 50 has a pivot joint 80.2R next to the wheel hub 24 and a pivot joint 80.4R at the holder 18. The sensor 100 is arranged in a pivot joint 80 of at least one of the link arms 40, 50. Each of the at least two link arms 40, 50 is connected to the wheel hub 24 via a pivot axis 82.1 R for joint 80.1 R and axis 82.2R for joint 82.2R which is oriented parallel to a longitudinal extension of the frame rail 22. The pivot joints 80.1 and 80.2 of the link arms 40, 50 of the double wishbone suspension are arranged next to the wheel hub 24 at the end of the respective wishbone link arm 40, 50. By having a vertical distance between the two link arms 40, 50 at the wheel hub 24, it is possible to tilt the wheel as a whole about its ground contact point when the height of the vehicle is changed in standstill, i.e. the wheel can compensate the movement of the frame 20 a vertical direction 70 by a tilt movement. Advantageously, the upper link arm 40 is shorter than the lower link arm 50.

The pivot axes 82.1 R, 82.2R of the pivot joints 80.1 R, 80.2R are oriented parallel to the ground. In the embodiment shown, the pivot axis 82.1 R, 82.2R is parallel to the frame rails 22R, 22L.

When the frame 20 experiences a vertical movement in the vertical direction 70, e.g. by action of the air suspension system 60, the pivot joints 80.1 R, 80.2R rotate about the axes 82.1 R, 82.2R as well as the pivot joints 80.3R, 80.4R rotate about their respective pivot axes. The rotation is a response to the vertical movement so that a height change can be derived from an angle of rotation. The rotation results in a tilt movement of the wheel 12. The rotation can be detected by the sensor 100.

One or more sensors 100 can be arranged in pivot joints 80 which are responsive to vertical movements of the frame 20. For instance, one sensor 100 can be arranged in the pivot joint 80.1 R of the upper link arm 40R and one sensor 100 can be arranged in the pivot joint 80.2R of the lower link arm 50R. Of course, one or more sensors 100 could be arranged on the pivot joints 80.1 L and/or 80.2L of the left frame rail 22L.

Being part of the suspension, the pivot joints 80R, 80L carry substantial load from the frame 20 to the wheel (not shown). In another embodiment not shown, the pivot joint 80 is configured to carry side load forces introduced by at least one wheel 12.

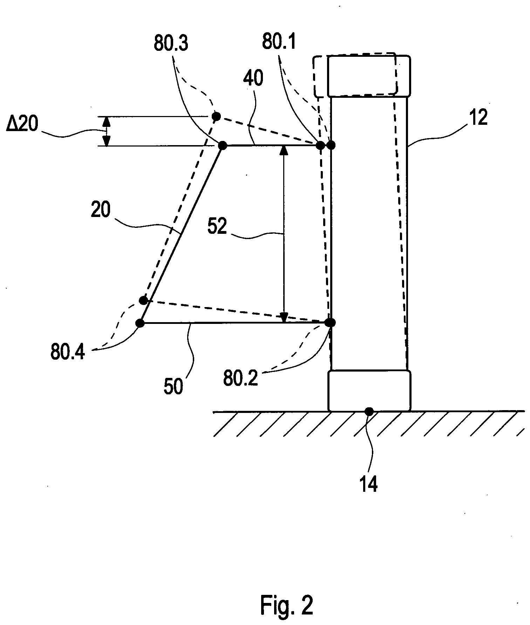

Fig. 2 illustrates how the wheel 12 is tilted about its ground contact point 14 when the frame 20 exerts a vertical movement causing a height change Δ20 of the frame 12.

The ground contact point 14 can be understood as the centre of the width of the wheel 12 where it touches the ground. This contact point 14 is expediently as constant as possible.

As the vertical movement is transformed in a rotation in the pivot joints 80.1 and 80.2 of the upper short link arm 40 and the lower long link arm 50 separated by the vertical distance 52, the wheel 12 is pulled towards the frame 20 by an upward movement and pushed away from the frame 20 by a downward movement of the frame 20 and tilts accordingly inward and outward about the ground contact point 14. By the tilt movement, the wheel 12 experiences no sideward movement on the ground with respect to the position of the frame 20.

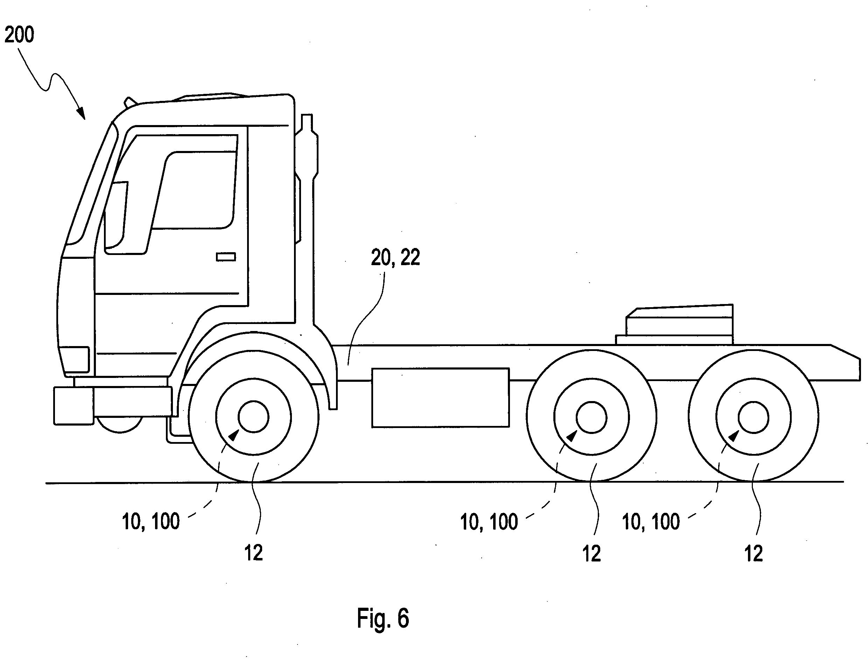

Because of the tilt movement, the wheel 12 can follow a vertical movement of the frame 20 without damage when the vehicle is at standstill during the vertical movement. The ground contact point 14 of the wheel 12 associated to the wheel hub 24 is predominantly stationary with respect to a movement sideways in case the height of the vehicle 200 (shown in Fig. 6) is changed.

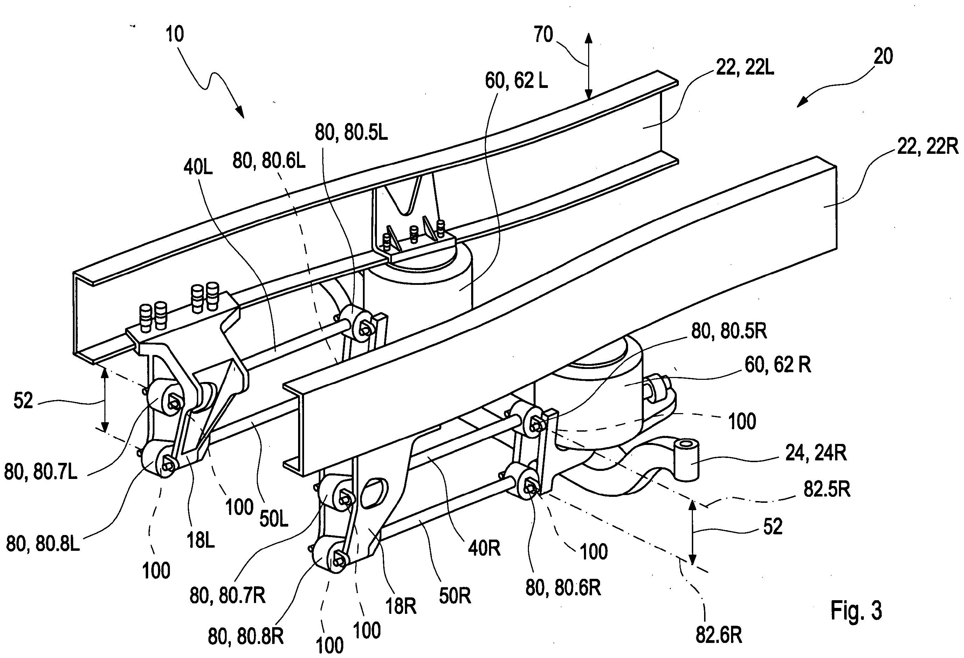

Fig. 3 illustrates another embodiment of a wheel suspension arrangement 10, wherein the link arms 40, 50 are arranged substantially in parallel to the frame rails 22R, 22L. According to this embodiment, packaging is facilitated because the engine can be placed between the front wheels.

To avoid unnecessary repetitions, reference is made to the description of the first embodiment shown in Figs. 1a, 1b with respect to like components not explained in detail here.

The link arms 40, 50 in this example embodiment are arranged substantially parallel to the frame rails 22R, 22L and arranged with a vertical distance 52 to each other. The link arms 40, 50 are arranged between the wheel hub 24 and the frame 20. The link arms 40, 50 are attached to the frame rails 22 of the frame 20 with a holder 18. The upper link arm 40 has a pivot joint 80.5R next to the wheel hub 24 and a pivot joint 80.7R at the holder 18. The lower link arm 50 has a pivot joint 80.6R next to the wheel hub 24 and a pivot joint 80.8R at the holder 18. Pivot axes 82.5R and 82.6R which are likewise separated by the vertical distance 52 of the pivot joints 80.5R and 80.6R are indicated by broken lines.

Sensors 100 may be arranged at least in one of the pivot joints 80, e.g. in the 80.5R and 80.6R of the right frame rail 22R.

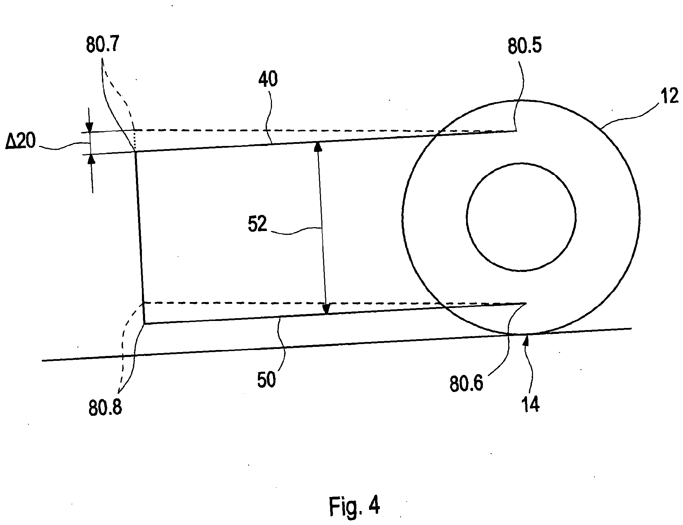

As depicted in Fig. 4 with reference to the geometrical arrangement in Fig. 3, the pivot joints 80 rotate about their respective pivot axes which are oriented parallel to the ground and perpendicular to the frame rails 22 when the frame 20 moves in a vertical direction 70. The pivot axes are oriented parallel to the rotation axis of the wheel and crosswise to the beam 22R. Thus, a wheel 12 mounted to the wheel hub 24 will respond to the vertical movement by a rotation about its rotation axis, as depicted in Fig. 4.

A ground contact point 14 of a wheel 12 associated to the wheel hub 24 is predominantly stationary with respect to a movement sideways in case the height of the vehicle 200 (shown in Fig. 6) is changed.

Because of the rotation, the wheel 12 can follow a vertical movement of the frame 12 without damage when the vehicle is at standstill during the vertical movement. The ground contact point 14 of the wheel 12 associated to the wheel hub 24 is predominantly stationary with respect to a movement sideways in case the height of the vehicle 200 (shown in Fig. 6) is changed by Δ20 but can move along the rotation direction of the wheel 12.

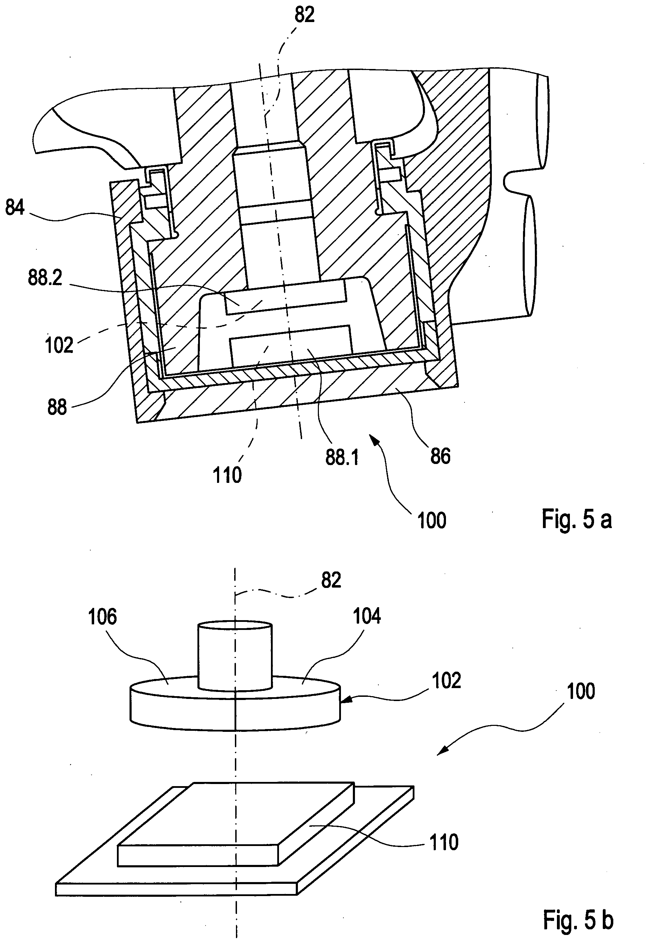

Figs. 5a, 5b depict an example embodiment of a sensor 100 which may be an angle sensor, wherein Fig. 5b illustrates a general setup of the sensor 100 embodied as a magnetic sensor device.

The height of the frame 20 with respect to the wheel hub 24 is derivable from an angle measured by the sensor 100. Expediently, the sensor 100 is a magnetic sensor with a Hall device 110 which is responsive to a magnet device 102. The Hall device 110 is a flat, plate like element which can be manufactured with thin film technology. Depending on the orientation of the magnetic poles 104, 106 of the magnet device 102, the Hall device 110 generates an electric signal proportional to the rotation angle of the pivot joint 80.

As shown in Fig. 5a, the sensor 100, particularly the Hall device 110, can be arranged at the inside of a cover 86 of a housing 84 of the pivot joint 80. The Hall device 110 is attached to the inner side of the cover 86 and protrudes in a cavity 88.1 of a holder 88 inside a housing 84 of the pivot joint 80. The magnet device 102 can be arranged in a cavity 88.2 of the holder 88. The cavities 88.1, 88.2 are arranged in a way that the magnetic device 102 is in a defined distance and position in relation to the Hall device. The holder 88 pivots simultaneously with the pivot joint 80 in relation to the cover 86 which remains stationary, or vice versa.

When pivoting the pivot joint 80, i.e. rotating the magnet 102 with respect to the Hall device 110 about a pivot axis, for instance 82.1 R, 82.2R in Fig. 1b and 82.5R and 82.6R in Fig. 3, an electric signal is generated as well known in the art according to the angle by which the magnet 102 is rotated with respect to the Hall device 110. The signal may be transmitted to a control device (not shown) where a vertical movement of the frame 20 with respect to the wheel hub 24 is derived from the measured angle.

Fig. 6 depicts an example embodiment of a vehicle 200, embodied as a truck, which comprises a wheel suspension arrangement 10 as described above. The wheel suspension arrangement 10 is adapted for performing a height adjustment of the frame 20 during standstill of the vehicle 200.

The one or more sensors 100 are preferably configured to provide a digital sensor signal, particularly to a vehicular data bus, preferably a CAN bus. The sensor 100 can be easily integrated in the electronic architecture of the vehicle.

Favourably, the invention can be employed on different kinds of suspension, particularly of truck suspensions, where an angle rotation can be measured which is responsive to a vertical movement of the vehicle frame 20, such as in a pivot joint of a wishbone arm, a reaction rod or the like.

The invention is not in any way limited to the above described embodiments, instead a number of alternatives and modifications are possible without departing from the scope of the following claims.

For example, said means for controlling (or an actuator for adjusting) the vertical distance between the frame and the wheel hub may be separate from the suspension means. Further, means for controlling (or an actuator for adjusting) the vertical distance between the frame and the wheel hub may be formed by a mechanical device.

Further, regarding the rear axle, the invention is not limited to a rear axle with individual wheel suspension. Instead, the invention may be applicable for a rigid rear axle. Especially, the invention may be applicable for a reaction-free rear axle suspension.

## Claims

1. A wheel suspension arrangement (10) comprising a frame (20), a wheel hub (24), at least one sensor (100) for determining a vertical distance between the frame (20) and the wheel hub (30) and at least two link arms (40, 50) which are pivotably connected between the frame (20) and the wheel hub (24) at different heights, wherein the sensor (100) is an angle sensor and is arranged in a pivot joint (80) of at least one of the link arms (40, 50), **characterized in**
- **that** the at least one sensor (100) is a magnetic sensor with a Hall device (110) responsive to a magnet device (102),
- **that** the arrangement (10) comprises means (60) for controlling the vertical distance between the frame (20) and the wheel hub (30), the means (60) being configured to provide a means for a manual or automatic control of said vertical distance in order to achieve a desired vertical distance between the frame (20) and the wheel hub (30) based on the sensed angle and
- **that** the pivot axis (82) of the pivot joint (80) is parallel to the ground and each of the at least two link arms (40, 50) is connected to the frame (20) via the pivot axis (82.1 R, 82.2R, 82.5R, 82.6R) which is oriented either parallel or perpendicular to a longitudinal extension of the frame (20) so that a ground contact point (14) of a wheel (12) associated to the wheel hub (24) is predominantly stationary with respect to a movement sideways in case the vertical distance between the frame (20) and the wheel hub (30) is changed.

2. The wheel suspension arrangement according to claim 1, **characterized in that** the pivot joint (80) is configured to carry substantial load from the frame (20) to at least one wheel (12) associated to the wheel hub (30).

3. The wheel suspension arrangement according any preceding claim, **characterized in that** the pivot joint (80) is configured to carry side load forces introduced by at least one wheel (12) associated to the wheel hub (30) and/or **in that** the vertical distance between the frame (20) and the wheel hub (30) is derivable from the angle measured by the sensor (100).

4. The wheel suspension arrangement according to any preceding claim, **characterized in that** the at least one sensor (100) is configured to provide a digital sensor signal, particularly to a vehicular data bus, preferably a CAN bus.

5. The wheel suspension arrangement according to any preceding claim, **characterized in that** the arrangement comprises suspension means (60) provided between the wheel hub (24) and the frame (20).

6. The wheel suspension arrangement according to any preceding claim, **characterized in that** the wheel hub (24) is suspended to the frame (20) by means of an air spring system (60).

7. The wheel suspension arrangement according to any one of claims 1-5, **characterized in that** the wheel hub (24) is suspended to the frame (20) by means of a leaf spring system.

8. The wheel suspension arrangement according to any preceding claim, **characterized in that** the arrangement comprises a front axle (16) comprising said wheel hub (24) and that it is configured for an individual wheel suspension.

9. The wheel suspension arrangement according to any preceding claim, **characterized in that** the arrangement comprises a rear axle comprising said wheel hub (24) and that it is configured for an individual wheel suspension.

10. The wheel suspension arrangement according to any preceding claim, **characterized in that** each of two or more pivot joints (80) is equipped with said sensor (100).

11. The wheel suspension arrangement according to any preceding claim, **characterized in that** the arrangement is adapted to allow an adjustment of the vertical distance between the frame (20) and the wheel hub (30) during standstill of the vehicle (200).

12. The wheel suspension arrangement according to any preceding claim, **characterized in that** the at least two link arms form (40, 50) a double wishbone suspension.

13. A vehicle (200), particularly a truck, comprising a wheel suspension arrangement (10) according to any preceding claim.

## Patentansprüche

1. Radaufhängungsanordnung (10), umfassend einen Rahmen (20), eine Radnabe (24), wenigstens einen Sensor (100) zur Bestimmung eines vertikalen Abstands zwischen dem Rahmen (20) und der Radnabe (24) und wenigstens zwei Verbindungsarme (40, 50), die schwenkbar zwischen dem Rahmen (20) und der Radnabe (24) in unterschiedlichen Höhen verbunden sind, wobei der Sensor (100) ein Winkelsensor ist und in einem Schwenkgelenk (80) wenigstens eines der Verbindungsarme (40, 50) angeordnet ist, **dadurch gekennzeichnet, dass**
- der wenigstens eine Sensor (100) ein magnetischer Sensor mit einer Hall-Einrichtung (110) ist, die auf eine Magneteinrichtung (102) reagiert,
- die Anordnung (10) ein Mittel (60) zur Steuerung des vertikalen Abstands zwischen dem Rahmen (20) und der Radnabe (24) umfasst, wobei das Mittel (60) dafür konfiguriert ist, ein Mittel für eine manuelle oder automatische Steuerung des vertikalen Abstands bereitzustellen, um einen gewünschten vertikalen Abstand zwischen dem Rahmen (20) und der Radnabe (24) auf der Grundlage des erfassten Winkels zu erzielen, und
- die Schwenkachse (82) des Schwenkgelenks (80) parallel zum Boden verläuft und jeder der wenigstens zwei Verbindungsarme (40, 50) mit dem Rahmen (20) über die Schwenkachse (82.1 R, 82.2R, 82.5R, 82.6R) verbunden ist, die entweder parallel oder senkrecht zu einer Längserstreckung des Rahmens (20) ausgerichtet ist, so dass ein Bodenkontaktpunkt (14) eines Rads (12), das zu der Radnabe (24) gehört, hauptsächlich stationär bezüglich einer Seitwärtsbewegung ist, wenn der vertikale Abstand zwischen dem Rahmen (20) und der Radnabe (24) geändert wird.

2. Radaufhängungsanordnung nach Anspruch 1, **dadurch gekennzeichnet, dass** das Schwenkgelenk (80) dafür konfiguriert ist, eine wesentliche Last von dem Rahmen (20) auf wenigstens ein Rad (12), das zu der Radnabe (24) gehört, zu übertragen.

3. Radaufhängungsanordnung nach einem der vorhergehenden Ansprüche, **dadurch gekennzeichnet, dass** das Schwenkgelenk (80) dafür konfiguriert ist, Seitenlastkräfte zu tragen, die von wenigstens einem Rad (12) eingebracht werden, das zu der Radnabe (24) gehört, und/oder dass der vertikale Abstand zwischen dem Rahmen (20) und der Radnabe (24) aus dem Winkel ableitbar ist, der von dem Sensor (100) gemessen wird.

4. Radaufhängungsanordnung nach einem der vorhergehenden Ansprüche, **dadurch gekennzeichnet, dass** der wenigstens eine Sensor (100) dafür konfiguriert ist, ein digitales Sensorsignal zu liefern, insbesondere an einen Fahrzeugdatenbus, bevorzugt einen CAN-Bus.

5. Radaufhängungsanordnung nach einem der vorhergehenden Ansprüche, **dadurch gekennzeichnet, dass** die Anordnung ein Aufhängungsmittel (60) umfasst, das zwischen der Radnabe (24) und dem Rahmen (20) vorgesehen ist.

6. Radaufhängungsanordnung nach einem der vorhergehenden Ansprüche, **dadurch gekennzeichnet, dass** die Radnabe (24) mittels eines Luftfedersystems (60) an dem Rahmen (20) aufgehängt ist.

7. Radaufhängungsanordnung nach einem der Ansprüche 1 bis 5, **dadurch gekennzeichnet, dass** die Radnabe (24) mittels eines Blattfedersystems an dem Rahmen (20) aufgehängt ist.

8. Radaufhängungsanordnung nach einem der vorhergehenden Ansprüche, **dadurch gekennzeichnet, dass** die Anordnung eine Vorderachse (16) umfasst, die die Radnabe (24) umfasst und für eine Einzelradaufhängung konfiguriert ist.

9. Radaufhängungsanordnung nach einem der vorhergehenden Ansprüche, **dadurch gekennzeichnet, dass** die Anordnung eine Hinterachse umfasst, die die Radnabe (24) umfasst und für eine Einzelradaufhängung konfiguriert ist.

10. Radaufhängungsanordnung nach einem der vorhergehenden Ansprüche, **dadurch gekennzeichnet, dass** jedes von zwei oder mehr Schwenkgelenken (80) mit dem Sensor (100) versehen ist.

11. Radaufhängungsanordnung nach einem der vorhergehenden Ansprüche, **dadurch gekennzeichnet, dass** die Anordnung dafür eingerichtet ist, eine Einstellung des vertikalen Abstands zwischen dem Rahmen (20) und der Radnabe (24) während des Stillstands des Fahrzeugs (200) zu ermöglichen.

12. Radaufhängungsanordnung nach einem der vorhergehenden Ansprüche, **dadurch gekennzeichnet, dass** die wenigstens zwei Verbindungsarme (40, 50) eine Doppelquerlenkeraufhängung bilden.

13. Fahrzeug (200), insbesondere ein Lastwagen, umfassend eine Radaufhängungsanordnung (10) nach einem der vorhergehenden Ansprüche.

## Revendications

1. Agencement de suspension de roue (10) comprenant un châssis (20), un moyeu de roue (24), au moins un capteur (100) pour déterminer une distance verticale entre le châssis (20) et le moyeu de roue (30) et au moins deux bras de liaison (40, 50) qui sont reliés à pivotement entre le châssis (20) et le moyeu de roue (24) à différentes hauteurs, dans lequel le capteur (100) est un capteur d'angle et est agencé dans une articulation pivotante (80) d'au moins l'un des bras de liaison (40, 50), **caractérisé**
- **en ce que** l'au moins un capteur (100) est un capteur magnétique ayant un dispositif à effet Hall (110) sensible à un dispositif à aimant (102),
- **en ce que** l'agencement (10) comprend des moyens (60) pour commander la distance verticale entre le châssis (20) et le moyeu de roue (30), les moyens (60) étant configurés pour fournir un moyen pour une commande manuelle ou automatique de ladite distance verticale afin d'obtenir une distance verticale souhaitée entre le châssis (20) et le moyeu de roue (30) sur la base de l'angle détecté et
- **en ce que** l'axe de pivotement (82) de l'articulation pivotante (80) est parallèle au sol et chacun des au moins deux bras de liaison (40, 50) est relié au châssis (20) par l'intermédiaire de l'axe de pivotement (82.1 R, 82.2R, 82.5R, 82.6R) qui est orienté soit parallèlement soit perpendiculairement à une extension longitudinale du châssis (20) de sorte qu'un point de contact avec le sol (14) d'une roue (12) associée au moyeu de roue (24) est principalement fixe par rapport à un mouvement latéral dans le cas où la distance verticale entre le châssis (20) et le moyeu de roue (30) est modifiée.

2. Agencement de suspension de roue selon la revendication 1, **caractérisé en ce que** l'articulation pivotante (80) est configurée pour porter une charge importante à partir du châssis (20) à au moins une roue (12) associée au moyeu de roue (30).

3. Agencement de suspension de roue selon l'une quelconque des revendications précédentes, **caractérisé en ce que** l'articulation pivotante (80) est configurée pour encaisser des forces de charge latérales introduites par au moins une roue (12) associée au moyeu de roue (30) et/ou **en ce que** la distance verticale entre le châssis (20) et le moyeu de roue (30) peut être dérivée de l'angle mesuré par le capteur (100).

4. Agencement de suspension de roue selon l'une quelconque des revendications précédentes, **caractérisé en ce que** l'au moins un capteur (100) est configuré pour fournir un signal de capteur numérique, en particulier à un bus de données de véhicule, de préférence un bus CAN.

5. Agencement de suspension de roue selon l'une quelconque des revendications précédentes, **caractérisé en ce que** l'agencement comprend des moyens de suspension (60) prévus entre le moyeu de roue (24) et le châssis (20).

6. Agencement de suspension de roue selon l'une quelconque des revendications précédentes, **caractérisé en ce que** le moyeu de roue (24) est suspendu au châssis (20) au moyen d'un système à ressort pneumatique (60).

7. Agencement de suspension de roues selon l'une quelconque des revendications 1 à 5, **caractérisé en ce que** le moyeu de roue (24) est suspendu au châssis (20) au moyen d'un système de ressorts à lames.

8. Agencement de suspension de roue selon l'une quelconque des revendications précédentes, **caractérisé en ce que** l'agencement comprend un essieu avant (16) comprenant ledit moyeu de roue (24) et **en ce qu'**il est configuré pour une suspension de roue individuelle.

9. Agencement de suspension de roue selon l'une quelconque des revendications précédentes, **caractérisé en ce que** l'agencement comprend un essieu arrière comprenant ledit moyeu de roue (24) et **en ce qu'**il est configuré pour une suspension de roue individuelle.

10. Agencement de suspension de roue selon l'une quelconque des revendications précédentes, **caractérisé en ce que** chacune d'au moins deux articulations pivotantes (80) est équipée dudit capteur (100).

11. Agencement de suspension de roue selon l'une des revendications précédentes, **caractérisé en ce que** l'agencement est adapté pour permettre un réglage de la distance verticale entre le châssis (20) et le moyeu de roue (30) pendant l'arrêt du véhicule (200).

12. Agencement de suspension de roue selon l'une quelconque des revendications précédentes, **caractérisé en ce que** les au moins deux bras de liaison (40, 50) forment une suspension à double triangle.

13. Véhicule (200), en particulier un camion, comprenant un agencement de suspension de roue (10) selon l'une quelconque des revendications précédentes.
